# EUROPÄISCHE PATENTSCHRIFT

(11) **EP 1 828 643 B1**
(45) Veröffentlichungstag und Bekanntmachung des Hinweises auf die Patenterteilung: **17.02.2010**
(21) Anmeldenummer: 05850263.4
(22) Anmeldetag: 13.12.2005
(51) Int. Cl.: F16H 61/42, F16H 59/54

(54) **VERFAHREN ZUM ABBREMSEN EINES MITTELS EINES HYDROSTATISCHEN GETRIEBES ANGETRIEBENEN FAHRZEUGS SOWIE EIN HYDROSTATISCHER ANTRIEB**
METHODS FOR BRAKING A VEHICLE DRIVEN BY A HYDROSTATIC GEARBOX AND A HYDROSTATIC DRIVE
PROCEDE POUR FREINER UN VEHICULE ENTRAINE AU MOYEN D'UNE BOITE DE VITESSES HYDROSTATIQUE ET BOITE DE VITESSES HYDROSTATIQUE

(30) Priorität: 21.12.2004 DE 102004061558
(43) Veröffentlichungstag der Anmeldung: 05.09.2007
(73) Patentinhaber: Brueninghaus Hydromatik GmbH, 89275 Elchingen (DE)
(72) Erfinder: ESSIG, Heinz-Gerhard, 89173 Lonsee (DE)
(74) Vertreter: Körfer, Thomas
(86) Internationale Anmeldenummer: PCT/EP2005/013385
(87) Internationale Veröffentlichungsnummer: WO 2006/066759

(56) Entgegenhaltungen:
- EP-A- 0 752 545
- EP-A- 1 277 991
- CA-A1- 2 342 699
- DE-A1- 10 332 542
- US-A- 3 797 244
- US-A- 3 988 893
- US-A- 5 890 982
- PATENT ABSTRACTS OF JAPAN Bd. 018, Nr. 496 (M-1674), 16. September 1994 (1994-09-16) & JP 06 166350 A (MAZDA MOTOR CORP), 14. Juni 1994 (1994-06-14)

## Beschreibung

Die Erfindung betrifft ein Verfahren zum Abbremsen eines Mittels eines hydrostatischen Getriebes angetriebenen Fahrzeugs sowie einen entsprechenden hydrostatischen Antrieb, entsprechend dem Oberbegriff der Ansprüche 1,5.

Mobile Arbeitsmaschinen, wie beispielsweise Bagger oder Radlader, werden meist durch hydrostatische Getriebe angetrieben. Dabei wird von einem als Dieselmotor ausgeführten Antriebsmotor eine hydrostatische Pumpe getrieben, die über Arbeitsleitungen mit zumindest einem Hydromotor verbunden ist. Durch Verstellen des Schwenkwinkels seitens der Hydropumpe beziehungsweise seitens des Hydromotors kann die Übersetzung eines solchen hydrostatischen Getriebes variiert und damit die Fahrgeschwindigkeit bestimmt werden. Die mögliche Verstellung des Schwenkwinkels und damit des Fördervolumens der Pumpe sowie des Schluckvolumens des Motors begrenzt dabei den Übersetzungsbereich, der mit dem hydrostatischen Getriebe abgedeckt werden kann.

Aus der DE 101 33 358 A1 ist ein hydrostatisches Getriebe bekannt, bei dem mit dem Hydromotor ein Schaltgetriebe verbunden ist. Dieses nachgeordnete Schaltgetriebe erlaubt es, zusätzlich zu der Übersetzungsänderung des hydrostatischen Getriebes eine weitere Übersetzungsänderung durch das Schaltgetriebe vorzunehmen. Der gesamte Fahrgeschwindigkeitsbereich, in dem das Fahrzeug betrieben werden kann, wird somit erhöht. Um die Schaltrucke zu minimieren, ist es in der DE 101 33 358 A1 vorgeschlagen, die Ausgangswelle des Hydromotors für den Schaltvorgang drehmomentfrei zu schalten. Zum Verstellen des Fördervolumens der Hydropumpe beziehungsweise des Schluckvolumens des Hydromotors sind für jede der beiden Axialkolbenmaschinen Verstellvorrichtungen vorgesehen. Die Verstellvorrichtungen werden durch ein Steuergerät mit Steuersignalen versorgt, so dass durch eine entsprechende Vorgabe der Steuersignale seitens des Steuergeräts eine Verstellung des Schwenkwinkels der hydrostatischen Kolbenmaschinen erfolgt. Um den Hydromotor während des Schaltvorgangs drehmomentfrei schalten zu können, erhält das Steuergerät ein Schaltsignal, aufgrund dessen es die Verstellvorrichtung des Hydromotors entsprechend ansteuert. Der Hydromotor wird in Folge dessen auf ein minimales Schluckvolumen gestellt, bei der gerade das Schleppmoment des Hydromotors kompensiert ist. In diesem Zustand ist die Ausgangswelle des Hydromotors drehmomentfrei und das Schaltgetriebe kann lastfrei einen anderen Gang einlegen. Nachdem der andere Gang eingelegt ist, wird das Signal, das an das Steuergerät übermittelt wird, zurückgenommen und der Hydromotor erneut auf einen von dem minimalen Schwenkwinkel abweichenden Wert verstellt, der der entsprechende Fahrsituation angepasst ist.

Der beschriebene hydrostatische Antrieb bzw. das Verfahren zum Wechseln von Gängen hat jedoch den Nachteil, dass eine Verschwenkung des Hydromotors auf einen minimalen Schwenkwinkel nur erfolgt, um einen Gangwechsel in dem nachgeschalteten Getriebe zu ermöglichen. Es ist dagegen nicht vorgesehen, in anderen Fahrsituationen die Ausgangswelle des Hydromotors drehmomentfrei zu stellen. Das bedeutet, dass auch während eines Bremsvorgangs durch den Hydromotor bzw. dessen Abtriebswelle auf den Fahrzeugantrieb ein Drehmoment ausgeübt wird. Für einen optimalen Bremsvorgang durch eine Betriebsbremse wäre es dagegen vorteilhaft, wenn auf die Räder des Fahrzeugs ausschließlich das durch die Betriebsbremse erzeugte Bremsmoment wirkt.

Die gattungsgemäße Patentschrift uns 5, 890, 982 offenbart ein hydrostatisch-mechanisches Leistungsverzweigungsgetriebe mit einem hydrostatischen Umsetzer, der aus zwei hydrostatischen Maschineneinheiten A und B besteht. Die hydrostatischen Maschinen A und B können bei dem Antrieb so betrieben werden, dass der gesamte hydrostatische Umsetzer als Pumpe wirkt. Wird das im hydrostatischen Umsetzer integrierte Bremssystem betätigt, so wird eine Verstellung der verstellbaren ersten hydrostatischen Maschine A, welche mit einer Drehmoment zuführenden Eingangswelle verbunden ist, vorgenommen. Die Verstellung der als Hydropumpe arbeitenden hydrostatischen Maschine A in Richtung kleineren Hubvolumens dient der Abbremsung des Systems durch das hydrostatische Getriebe. Die hydrostatische Maschine B hingegen ist nicht verstellbar ausgeführt.

Die Patentschrift US 3,988,893 zeigt einen hydrostatischen Antrieb, welcher auf jeder Fahrzeugseite jeweils ein hydrostatisches Getriebe mit Pumpe und Motor aufweist. Das Übersetzungsverhältnis zwischen der Pumpe und dem Motor eines einzelnen hydrostatischen Getriebes wird auf jeder Fahrzeugseite jeweils einzeln angesteuert. Dazu ist ein für beide hydrostatische Getriebe gemeinsames vorgeschaltetes Geschwindigkeitssteuerventil vorgesehen. Dieses Geschwindigkeitssteuerventil beaufschlagt für jedes hydrostatische Getriebe jeweils ein für das jeweilige hydrostatische Getriebe separat nachgeschaltetes Steuerventil. Der von einem nachgeschalteten Steuerventil ausgegebene Steuerdruck dient der Betätigung der Verstellvorrichtungen des entsprechenden hydrostatischen Getriebes. Mit den Verstellvorrichtungen werden die Hydropumpe und der Hydromotor des jeweiligen hydrostatischen Getriebes jeweils angesteuert. Wenn durch einen Fahrer die Betriebsbremse betätigt wird, werden die hydrostatischen Getriebe beider Fahrzeugseiten jeweils verstellt. Dadurch wird die Betriebsbremse entlastet und dessen Abnutzung reduziert. Dagegen ist ein Bremsvorgang, bei dem ohne Getriebedrehmoment gebremst wird, nicht realisiert. Wenn eine Speisepumpe keinen ausreichenden Speisedruck liefert, greift die Sicherheitseinrichtung ein und das hydrostatische Getriebe wird verstellt. Unter der Verstellung eines hydrostatischen Getriebes wird dabei eine Reduzierung des jeweiligen Pumpenhubs bei gleichzeitiger Erhöhung des jeweiligen Motorhubs verstanden. Das heißt, dass bei dem in der Patentschrift offenbarten Antrieb bei einer Bestätigung einer Betriebsbremse der Hydromotor in Richtung großen Schluckvolumens und gleichzeitig die Hydropumpe in Richtung kleinen Fördervolumens verstellt wird.

Ein Antriebsdrehmoment auf die angetriebene Achse wird lediglich dadurch reduziert, dass die Arbeitsleitungen der jeweiligen hydrostatischen Getriebe, in denen die Hydropumpen mit ihren jeweiligen Hydromotoren verbunden sind, kurzgeschlossen werden. Die in den jeweiligen hydrostatischen Getrieben geschlossenen hydraulischen Kreisläufe werden durch Betätigung zweier Ventile kurzgeschlossen. Der auf maximales Fördervolumen eingestellte Hydromotor fördert damit Druckmittel im Kreis. Dennoch wirkt aufgrund der Bremswirkung der auftretenden Druckmittelströmungen in dem Hydromotor auf die angetriebenen Achsen weiterhin ein Hydromotor-Drehmoment mit Bremswirkung. Die Antriebswelle ist somit nicht drehmomentfrei und beeinflusst die Funktion einer weiteren Bremseinrichtung.

Der vorgeschlagene Kurzschluss des jeweiligen hydraulischen Kreislaufs bei gleichzeitigem Ausschwenken des Hydromotors führt bei hohen Fahrzeuggeschwindigkeiten zu erheblichen Druckmittelströmungen. Das offenbarte System erfordert für ein hydrostatisches Getriebe zusätzlich zu einer Verstellvorrichtung für den Hydromotor und für die Hydropumpe ein Kurzschlussventil, welches die beiden Arbeitsleitungen miteinander verbindet. Dadurch wird das hydrostatische Getriebe komplexer. Der Bremsvorgang bzw. das Verfahren zum Abbremsen wird durch den Kurzschluss der jeweiligen hydraulischen Kreisläufe bei gleichzeitigem Ausschwenken des Hydromotors ebenfalls komplexer.

Es ist daher die Aufgabe der Erfindung, ein vereinfachtes Verfahren zum Abbremsen eines mittels eines hydrostatischen Getriebes angetriebenen Fahrzeugs sowie einen vereinfachten hydrostatischen Antrieb zu schaffen, bei dem während eines Bremsvorgangs kein zusätzliches Moment auf die Abtriebswelle oder die angetrieben Achsen wirkt, so dass der Bremsvorgang somit unbeeinflusst ist.

Die Aufgabe wird durch das erfindungagemäße Verfahren mit den Merkmalen des Anspruchs 1 bzw. dem erfindungsgemäßen hydrostatischen Antrieb mit den Merkmalen des Anspruchs gelöst.

Erfindungsgemäß wird bei dem Verfahren zum Abbremsen eines mittels des hydrostatischen Getriebes angetriebenen Fahrzeugs durch die Betriebsbremse zunächst ein bestimmter Bremsvorgang als solcher erkannt. Liegt eine bestimmte Bremssituation vor und wird diese erkannt, so wird das Schluckvolumen des Hydromotors durch Verstellen des Hydromotor auf einen minimalen Schwenkwinkel reduziert. Bei diesem minimalen Schwenkwinkel wird beispielsweise gerade das Schleppmoment des Hydromotors kompensiert, so dass die Ausgangswelle des Hydromotors drehmomentenfrei ist. Dadurch wird durch das hydrostatische Getriebe kein Moment mehr auf den Fahrzeugantrieb übertragen und das Fahrzeug rollt frei, abgesehen vom Einfluss der Betriebsbremse.

Weiterhin ist es vorteilhaft an einer Antriebswelle das dort wirkende Moment der Antriebswelle zu messen und so bei der Einstellung des minimalen Schluckvolumens berücksichtigen zu können. Damit werden beispielsweise sich ändernde Reibungsverluste kompensiert, so dass unabhängig vom Verschleißzustand oder der Betriebstemperatur des hydrostatischen Antriebs kein fester minimaler Schwenkwinkel eingestellt, sondern vielmehr ein minimales Schluckvolumen eingestellt wird, das tatsächlich auch zu einer drehmomentenfreien Antriebswelle führt.

Ein solchermaßen frei rollendes Fahrzeug bietet optimale Voraussetzungen, um durch eine Betriebsbremse abgebremst zu werden. Um wieder zum normalen Fahrbetrieb zurückzukehren, wird zunächst das Ende des bestimmten Bremsvorgangs erkannt. Nachdem das Ende des Bremsvorgangs erkannt, wurde, wird der Hydromotor wieder ausgeschwenkt und so auf einen der erreichten Geschwindigkeit angepassten Schwenkwinkel bzw. ein entsprechendes Schluckvolumen verstellt. Die Fahrt des Fahrzeugs wird damit nach dem Lösen der Betriebsbremse wiederum durch das Übersetzungsverhältnis des hydrostatischen Getriebes festgelegt.

Die Unteransprüche betreffen vorteilhafte Weiterbildungen des erfindungsgemäßen hydrostatischen Antriebs sowie des erfindungsgemäßen Verfahrens.

Insbesondere ist es vorteilhaft, neben dem Hydromotor auch die Hydropumpe auf einen minimalen Schwenkwinkel zu verstellen, um so zu verhindern, dass der mit der Hydropumpe gekoppelte Antriebsmotor abgewürgt wird.

Wenn dem Hydromotor ein Schaltgetriebe nachgeordnet ist, so ist es besonders vorteilhaft, das zusätzlich durch das Schaltgetriebe verursachte Schleppmoment bei der Einstellung des minimalen Schwenkwinekels des Hydromotors zu berücksichtigen. In diesem Fall wird nicht die Antriebswelle des Hydromotors drehmomentfrei geschaltet, sondern die Ausgangswelle des Schaltgetriebes.

Ein besonders einfacher hydrostatischer Antrieb lässt sich realisieren, indem als Signal zum Erkennen eines bestimmten Bremszustandes ein durch ein ABS-Steuergerät erzeugtes Signal verwendet wird. Dieses Signal kann beispielsweise das Signal für einen Regeleingriff der ABS-Pumpeneinheit darstellen. Damit wird ein hydrostatischer Antrieb geschaffen, der lediglich in kritischen Bremssituationen den Schwenkwinkel des Hydromotors auf einen minimalen Wert stellt. In allen anderen Situationen, in denen die Haftgrenze des Antriebs jedoch nicht erreicht ist, kann das Verstellen des Schluckvolumens dagegen entfallen.

Soll auch im Bereich eines normalen, nicht ABS-geregelten Bremsvorgangs eine Verstellung erfolgen, so ist vorzugsweise ein Drucksensor vorzusehen, der ab einem bestimmten, in einem hydraulischen Bremskreis erzeugten Bremsdruck, ein Signal an das Steuergerät des hydrostatischen Getriebes sendet. Damit wird sichergestellt, dass oberhalb einer bestimmten Bremsleistung ausschließlich das durch die Betriebsbremse erzeugte Bremsmoment an den Rädern des Fahrzeugantriebs wirkt.

Die Erfindung ist in der Zeichnung dargestellt und wird anhand der nachfolgenden Beschreibung näher erläutert. Es zeigen:
- Fig. 1: eine schematische Darstellung eines erfindungsgemäßen hydrostatischen Antriebs zum Durchführen des Verfahrens zum Abbremsen des Fahrzeugs;
- Fig. 2: ein Ausführungsbeispiel zur Beschaltung einer Hydropumpe des erfindungsgemäßen hydrostatischen Antriebs;
- Fig. 3: ein Ausführungsbeispiel zur Beschaltung eines Hydromotors eines erfindungsgemäßen hydrostatischen Antriebs;
- Fig. 4: ein erstes Ausführungsbeispiel eines Fahrzeugantriebs mit dem erfindungsgemäßen hydrostatischen Antrieb;
- Fig. 5: ein zweites Ausführungsbeispiel eines Fahrzeugantriebs mit dem erfindungsgemäßen hydrostatischen Antrieb und
- Fig. 6: ein drittes Ausführungsbeispiel eines erfindungsgemäßen hydrostatischen Antriebs.

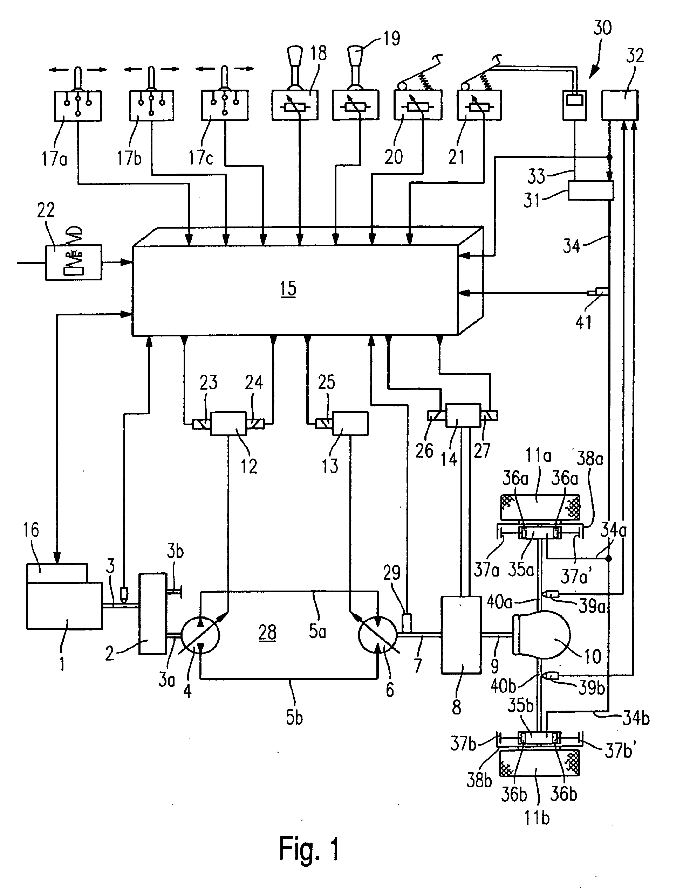

In der Fig. 1 ist eine schematische Darstellung eines erfindungsgemäßen und zur Durchführung des erfindungsgemäßen Verfahrens vorgesehenen hydrostatischen Antriebs dargestellt. Der hydrostatische Antrieb weist einen Antriebsmotor 1 auf, der mit einem Verteilergetriebe 2 über eine Welle 3 verbunden ist. Bei Nutzfahrzeugen wie mobilen Arbeitsmaschinen ist der Antriebsmotor 1 im Regelfall als Dieselmaschine ausgeführt. In dem dargestellten Ausführungsbeispiel ist das Verteilergetriebe 2 über eine Ausgangswelle 3a mit der Hydropumpe 4 verbunden. Die Hydropumpe 4 ist durch Verstellen ihres Schwenkwinkels in ihrem Fördervolumen verstellbar und zur Förderung in zwei Richtungen ausgelegt. Das Verteilergetriebe 2 kann eine weitere Ausgangswelle 3b aufweisen, über die beispielsweise weitere Antriebe mit dem Antriebsmotor 1 gekoppelt werden können.

Die Hydropumpe 4 ist über eine erste Arbeitsleitung 5a und eine zweite Arbeitsleitung 5b mit einem Hydromotor 6 verbunden. Der Hydromotor 6 ist ebenfalls in seinem Schwenkwinkel einstellbar, so dass das Schluckvolumen des Hydromotors 6 verstellt werden kann.

Die verstellbare Hydropumpe 4 bildet zusammen mit dem verstellbaren Hydromotor 6 und der ersten und derzweiten Arbeitsleitung 5a,b ein hydrostatisches Getriebe 28. Die Übersetzung des hydrostatischen Getriebes 28 wird durch Verstellen der Schwenkwinkel von Hydropumpe 4 und Hydromotor 6 und damit des Fördervolumens der Hydropumpe 4 und des Schluckvolumens des Hydromotors 6 eingestellt. Ausgangsseitig ist der Hydromotor 6 mit einer Abtriebswelle 7 verbunden. Mit der Abtriebswelle 7 ist weiterhin der Eingang eines Schaltgetriebes 8 verbunden, dessen Getriebeausgangswelle 9 mit einem Differential 10 verbunden ist. Das Differential 10 ist über eine erste Achswelle 40a bzw. eine zweite Achswelle 40b mit den angetriebenen Rädern 11a, 11b des Fahrzeugs verbunden.

Auf den Verstellmechanismus der Hydropumpe 4 wirkt eine Verstellvorrichtung 12. Eine weitere Verstellvorrichtung 13 wirkt auf den Verstellmechanismus des Hydromotors 6. Durch die individuellen Verstellvorrichtungen 12, 13 können die Schwenkwinkel der Hydropumpe 4 und des Hydromotors 6 unabhängig voneinander eingestellt werden. Die Verstellvorrichtung 12 des Hydropumpe 4 wird durch einen ersten und einen zweiten Elektromagneten 23, 24 betätigt. Die beiden Elektromagneten 23, 24 sind hierzu jeweils über eine Signalleitung mit einem Steuergerät 15 verbunden. Das Steuergerät 15 gibt an den ersten bzw. zweiten Elektromagneten 23 bzw. 24 Steuersignale aus.

Entsprechend ist die weitere Verstellvorrichtung 13, die ein dem Schwenkwinkel des Hydromotors 6 entsprechendes Signal vorgibt, durch einen dritten Elektromagneten 25 betätigt. Der dritte Elektromagnet 25 ist ebenfalls über eine Signalleitung mit dem Steuergerät 15 verbunden und erhält von diesem entsprechende Steuersignale zum Einstellen des Schluckvolumens des Hydromotors 6.

Zum Durchführen eines Gangwechsels in dem Schaltgetriebe 8 ist eine Schaltvorrichtung 14 vorgesehen, die über einen vierten Elektromagneten 26 und einen fünften Elektromagneten 27 betätigt wird. Der Gangwechsel in dem Schaltgetriebe 8 wird ebenfalls durch das Steuergerät 15 initiiert, welches hierzu ebenfalls über Signalleitungen mit dem vierten Elektromagneten 26 und dem fünften Elektromagneten 27 verbunden ist.

Ebenfalls über das Steuergerät 15 wird die Leistung und die Drehzahl des Antriebsmotors 1 geregelt. Das Steuergerät 15 ist hierzu mit einer Einspritzpumpe 16 verbunden. Durch das Steuergerät 15 wird zur Regelung des Antriebsmotors 1 der Einspritzpumpe 16 eine einzuspritzende Dieselmenge vorgegeben. Das Steuergerät 15 verarbeitet hierzu eine Reihe von Signalen, die den Fahrzustand des Arbeitsgeräts charakterisieren.

Mit den Eingängen des Steuergeräts 15 sind außerdem ein erster Auswahlschalter 17a, ein zweiter Auswahlschalter 17b und ein dritter Auswahlschalter 17c verbunden. Der erste Auswahlschalter 17a gibt dem Steuergerät 15 an, in welchem Fahrbereich sich die Arbeitsmaschine befindet. Hier kann beispielsweise zwischen Straßenfahrt und Geländeeinsatz unterschieden werden. Durch den zweiten Auswahlschalter 17b findet eine Gangvorwahl statt. So ist es möglich, dass der Bediener unabhängig von den weiteren, die Steuerung beeinflussenden Vorgaben festlegt, in welchem Gang sich das Schaltgetriebe 8 befinden soll. Der dritte Auswahlschalter 17c gibt schließlich die Fahrtrichtung des Fahrzeugs vor.

Wenn durch den Bediener über den ersten Auswahlschalter 17a festgelegt ist, dass sich das Fahrzeug im Arbeitsbetrieb befinden soll, wird die Bedienung über einen Handgashebel 18 sowie einen Handfahrhebel 19 ermöglicht. Durch den Handgashebel 18 wird eine Drehzahl des Dieselmotors vorgegeben. Entsprechend der vorgewählten Drehzahl des Dieselmotors steuert das Steuergerät 15 die Einspritzpumpe 16 an. So ist es möglich, unabhängig von der Fahrgeschwindigkeit den Antriebsmotor 1 auf eine seiner Maximalleistung entsprechende Drehzahl einzuregeln. Die jeweils nicht durch das hydrostatische Getriebe 28 abverlangte Leistung steht damit beispielsweise der Ausgangswelle 3b zur Verfügung, um weitere Antriebe anzusteuern. Bei der durch den Handgashebel 18 festgelegten Drehzahl kann unabhängig von der Drehzahl in gewissen Grenzen durch einen Handfahrhebel 19 die Fahrgeschwindigkeit des Fahrzeugs festgelegt werden; um die entsprechende Fahrgeschwindigkeit zu erreichen, wird durch das Steuergerät 15 mittels der Verstellvorrichtung 12 bzw. der weiteren Verstellvorrichtung 13 das Fördervolumen der Hydropumpe 4 bzw. das Schluckvolumen des Hydromotors 6 durch entsprechende Änderung des jeweiligen Schwenkwinkels verstellt.

Befindet sich der erste Auswahlschalter 17a dagegen in einer Position, die Straßenfahrt vorgibt, so sind der Handgashebel 18 sowie der Handfahrhebel 19 ohne Funktion und die Steuerung des Fahrzeugs erfolgt über ein Fahrpedal 20 sowie ein Bremspedal 21. Da sich im Straßenbetrieb die Funktion normalerweise auf den Antrieb des Fahrzeugs beschränkt, und weitere Funktionen, beispielsweise Heben oder Senken einer Schaufel, nicht durchgeführt werden, ist eine Entkopplung zwischen der vorgewählten Drehzahl des Antriebmotors 1 und der Übersetzung des hydrostatischen Getriebes 28 nicht erforderlich. Der Bediener gibt über das Fahrpedal 20 lediglich die gewünschte Beschleunigung oder Verzögerung vor.

Wird im Straßenbetrieb beispielsweise eine höhere Endgeschwindigkeit benötigt, so muss in dem Schaltgetriebe 8 ein Gangwechsel erfolgen, sobald das hydrostatische Getriebe 28 seine Übersetzungsgrenze erreicht hat. Während des Gangwechsels wird der Hydromotor 6 auf minimales Schluckvolumen verstellt, um die Abtriebswelle 7 drehmomentfrei stellen zu können. Hierzu wird ein Drehmomentsensor 9 an der Abtriebswelle 7 angeordnet, über den der Zustand "drehmomentfrei" an das Steuergerät 15 übermittelt wird.

Zum Verzögern des Fahrzeugs ist zusätzlich eine Betriebsbremse vorgesehen. Die Betriebsbremse wird über das Bremspedal 21 betätigt. Wird das Bremspedal 21 getreten, so wird in einem Hauptbremszylinder 30 ein Druck erzeugt, der über eine erste Bremsleitung 33 der Regelpumpeneinheit 31 zugeführt wird. Der Ausgang der Regelpumpeneinheit 31 ist über eine zweite Bremsleitung 34 sowie die Bremsleitungszweige 34a und 34b mit dem ersten Radbremszylinder 35a bzw. dem zweiten Radbremszylinder 35b verbunden. Die in den Radbremszylindern 35a,b befindlichen Bremskolben 36a,b werden auf Grund der hydraulischen Kraft zu entgegengesetzten Seiten der Radbremszylinder 35a bzw. 35b gedrückt. Mit den Bremskolben 36a und 36b sind Bremsbeläge 37a, 37a' bzw. 37b und 37b' verbunden. Abhängig von dem in den Radbremszylindern 35a und 35b wirkenden Drücken werden die Bremsbeläge 37a, 37a', 37b, 37b' gegen jeweils eine Bremstrommel 38a bzw. 38b gedrückt.

Die Verzögerung des Fahrzeugs wird damit über den in der zweiten Bremsleitung 34 bzw. den Bremsleitungszweigen 34a, 34b erzeugten Bremsdruck bestimmt. Ist der Bremsdruck jedoch so hoch, dass die Haftgrenze an einem der Räder 11a, 11b überschritten wird, so greift das ABS-System ein, indem durch die Regelpumpeneinheit 31 der Bremsdruck in der zweiten Bremsleistung 34 kurzfristig reduziert wird.

Zum Detektieren des Blockierens des Rades 11a bzw. des Rades 11b sind ein erster und ein zweiten Drehzahlsensor 39a bzw. 39b an der Achswelle 40a bzw. 40b angeordnet. Blockiert ein Rad 11a beispielsweise, so wird dies auf Grund des Signals des Drehzahlsensors 39a durch ein ABS-Steuergerät 32 erkannt. Das ABS-Steuergerät 32 übermittelt an die Regelpumpeneinheit 31 ein Signal, woraufhin in der Regelpumpeneinheit 31 ein Ventil geöffnet wird und somit die zweite Bremsleitung 34 entspannt wird.

Üblicherweise sind anders als im dargestellten Ausführungsbeispiel für die Räder 11a und 11b jeweils individuelle hydraulische Kreise vorgesehen, so dass durch die Regelpumpeneinheit 31 jeweils nur ein Bremskreis entspannt werden kann. Auf Grund der nachlassenden Bremskraft an dem entsprechenden Rad beginnt das Rad sich wieder zu drehen. Durch die Regelpumpeneinheit 31 wird anschließend wieder der volle Bremsdruck in der zweiten Bremsleitung 34 aufgebaut. Die Fig. 1 zeigt eine vereinfachte Darstellung, in der der Druck in dem ersten Radbremszylinder 35a und in dem zweiten Radbremszylinder 35b durch eine gemeinsame zweite Bremsleitung 34 erzeugt wird. Bei einem Fahrzeug mit vier gebremsten Rädern ist es heute in der Regel üblich ein sog. 4-Kanal-Bremssystem zu verwenden, bei dem für jeden Radbremszylinder individuell der Druck abgesenkt und wieder aufgebaut werden kann.

Das Signal, das den Regeleingriff durch die Regelpumpeneinheit 31 auslöst, wird von dem ABS-Steuergerät 32 nicht nur an die Regelpumpeneinheit 31, sondern auch an das Steuergerät 15 des hydrostatischen Fahrzeugantriebs übermittelt. Auf Grund des ankommenden Signals wird durch das Steuergerät 15 ein das Schluckvolumen des Hydromotors 6 betreffendes Stellsignal an den dritten Elektromagneten 25 übermittelt. Durch den dritten Elektromagneten 25 wird die Verstellvorrichtung 13 betätigt, die den Hydromotor 6 auf ein minimales Schluckvolumen verstellt. Das minimale Schluckvolumen ist dabei ein von 0 verschiedenes Schluckvolumen, bei dem das Schleppmoment des Motors beispielsweise ausgeglichen wird. Wird durch dieses minimale Schluckvolumen das Schleppmoment des Hydromotors 6 ausgeglichen, so ist die Abtriebswelle 7 drehmomentenfrei. An der Abtriebswelle 7 ist ein Drehmomentsensor 29 vorgesehen, der das Vorliegen oder Nicht-Vorliegen eines Drehmoments an der Antriebswelle 7 überwacht und ein entsprechendes Signal an das Steuergerät 15 übermittelt. Durch das Signal des Drehmomentsensors 29 kann das Steuergerät 15 ermitteln, ob die Antriebswelle 7 tatsächlich drehmomentenfrei ist.

Wird das Signal des Drehmomentensensor 29 von dem Steuergerät 15 verwendet, so wird der Schwenkwinkel des Hydromotors 6 dynamisch festgelegt. Das heißt, es wird nicht durch die Verstellvorrichtung 13 ein fester Schwenkwinkel des vorzugsweise als hydrostatische Kolbenmaschine ausgeführten Hydromotors 6 eingestellt, sondern durch eine entsprechende Nachführung des an den dritten Elektromagneten 25 übermittelten Signals der Hydromotor 6 solange in Richtung kleinerer Schwenkwinkel verstellt, bis ein minimales Schluckvolumen erreicht ist, das eine drehmomentfreie Abtriebswelle 7 sicherstellt.

In dem Steuergerät 15 können unterschiedliche Rampen festgelegt werden, entlang derer die Verstellvorrichtung 13 den Schwenkwinkel des Hydromotors 6 in Richtung seines minimalen Schluckvolumens verstellt.

Bei einem bevorzugten Verfahren wird zusätzlich zu dem Schluckvolumen des Hydromotors 6 auch das Fördervolumen der Hydropumpe 4 verstellt. Hierzu wird von dem Steuergerät 15 ein entsprechendes Steuersignal an den ersten Elektromagneten 23 bzw. den zweiten Elektromagneten 24 der Verstellvorrichtung 12 übermittelt. Die Verstellvorrichtung 12 betätigt daraufhin den Verstellmechanismus der Hydropumpe 4 und stellt auch die Hydropumpe 4 durch Reduzieren des Schwenkwinkels auf ein minimales Fördervolumen. Durch das Verstellen des Hydromotors 4 auf ein minimales Fördervolumen wird verhindert, dass der sich beim Bremsen normalerweise im Leerlauf befindliche Antriebsmotor 1 abgewürgt wird.

Liegen während des weiteren Bremsvorgangs wieder ausreichend griffige Fahrbahnverhältnisse vor, so beendet das ABS-Steuergerät 32 auf Grund der Signale der beiden Drehzahlsensoren 39a und 39b den ABS-Regelvorgang. Dementsprechend wird von dem ABS-Steuergerät 32 das den Regeleingriff durch die Regelpumpe 31 auslösende Signal zurückgenommen. An dem entsprechenden Eingang des Steuergeräts 15 liegt dann auch kein Signal mehr an und der Hydromotor 6 sowie die Hydropumpe 4 werden entsprechend der am Ende des Bremsvorgangs erreichten Fahrgeschwindigkeit wieder ausgeschwenkt. Die Verstellung der Hydropumpe 4 sowie des Hydromotors 6 erfolgt angepasst an die erreichte Fahrgeschwindigkeit, indem dem ersten Elektromagnet 23 bzw. dem zweiten Elektromagnet 24 der Verstellvorrichtung 12 und des Elektromagnet 25 der weiteren Verstellvorrichtung 13 ein entsprechendes Steuersignal übermittelt wird. In Abhängigkeit von der jeweiligen Betriebssituation kann zum Anfahren der neuen Schwenkwinkel der Hydropumpe 4 sowie des Hydromotors 6 unterschiedliche Rampen verwendet werden. So kann beispielsweise im Straßenbetrieb die Verstellung auf den angepassten Schwenkwinkel des Hydromotors 6 bzw. der Hydropumpe 4 entlang einer anderen Rampe erfolgen als im Geländeeinsatz.

Die vorstehende Beschreibung des Verfahrens zum Abbremsen eines durch ein hydrostatisches Getriebe angetriebenen Fahrzeugs geht davon aus, dass ein Eingriff in den Schwenkwinkel des Hydromotors 6 und die Verstellung auf minimales Schluckvolumens des Hydromotors 6 nur dann erfolgt, wenn ein Eingriff durch ein ABS-geregeltes Bremssystem erfolgt. In diesem Fall wird durch das Freistellen der Abtriebswelle 7 von Drehmoment eine Verbesserung des Regelverhaltens durch das ABS-System ermöglicht.

Das Fehlen eines durch den Antrieb eines Fahrzeugs erzeugten Drehmoments wirkt sich jedoch generell positiv auf das Bremsverhalten von Fahrzeugen aus. Es kann daher auch eine Verstellung auf minimalen Schwenkwinekl des Hydromotors 6 und der Hydropumpe 4 erfolgen, wenn ein ABS-System nicht vorgesehen ist. In diesem Fall kann als Signal beispielsweise das Drucksignal eines Drucksensors 41 in der zweiten Bremsleitung 34 verwendet werden. Übersteigt der Druck in der zweiten Bremsleitung 34 einen vorgegebenen Wert, so erfolgt eine Verstellung des Hydromotors 6 in Richtung seines minimalen Schluckvolumens durch das Steuergerät 15 in analoger Weise wie zuvor beschrieben. Es besteht auch die Möglichkeit, in dem Steuergerät 15 verschiedene Werte abzuspeichern. Die verschiedenen Druckwerte, bei denen ein Eingriff in den eingestellten Schwenkwinkels des Hydromotors 6 erfolgt, können den unterschiedlichen Anforderungen beispielsweise im Straßen- bzw. Geländebetrieb eines Baggers gerecht werden.

In dem dargestellten Ausführungsbeispiel der Fig. 1 ist der Drehmomentsensor 29 an der Antriebswelle 7 angeordnet. Es kann jedoch insbesondere vorteilhaft sein, die Reibung und das so erzeugte Schleppmoment des nachgeschalteten Schaltgetriebes 8 zu berücksichtigen. Hierzu wird das minimale Schluckvolumen des Hydromotors 6 so eingestellt, daß das zusätzlich durch das Schaltgetriebe 8 verursachte Schleppmoment mit berücksichtigt wird. Besonders einfach ist dies, indem der Drehmomentsensor 9 im Bereich der Getriebeausgangswelle 9 angeordnet wird. Aus Kostengründen kann jedoch auch auf den Drehmomentsensor 29 verzichtet werden und ein vorgegebener Wert durch die Verstellvorrichtung 13 bei dem Hydromotor 6 eingestellt werden. In einem solchen Fall wird die Abtriebswelle 7 bzw. die Getriebeausgangswelle 9 zwar nicht vollkommen drehmomentfrei, es wird jedoch gegenüber eines nicht verstellten Hydromotors 6 eine erhebliche Reduzierung des auf den Antrieb wirkenden Drehmoment erreicht.

Auch das zusätzliche Schleppmoment auf Grund des Differentials 10 kann bei der Einstellung des minimalen Schluckvolumens des Hydromotors 6 berücksichtigt werden.

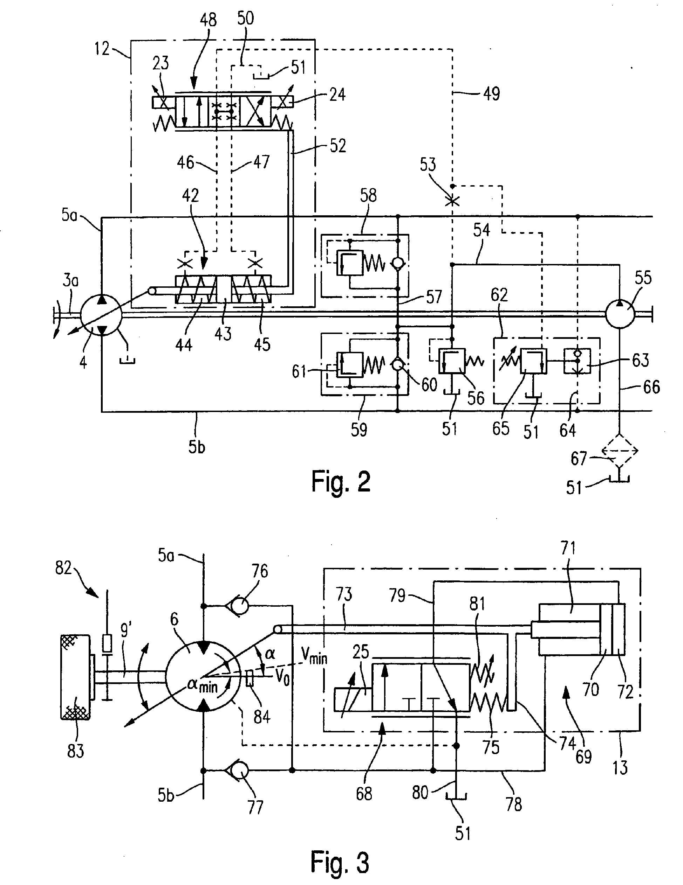

In der Fig. 2 ist ein hydraulischer Schaltplan zur Beschaltung einer verstellbaren Hydropumpe 4 dargestellt. Die Verstellung des Fördervolumens der Hydropumpe 4 erfolgt durch Betätigen eines Verstellmechanismus, mit dem der Schwenkwinkel einer Schrägscheibe der Hydropumpe 4 eingestellt werden kann. Hierzu ist mit dem Verstellmechanismus der Hydropumpe 4 eine Kolbenstange eines Stellkolbens 43 verbunden. Der Stellkolben 43 ist in einem Stellzylinder 42 angeordnet und teilt diesen in eine erste Stelldruckkammer 44 und eine zweite Stelldruckkammer 45. Neben den in der ersten Stelldruckkammer 44 und der zweiten Stelldruckkammer 44 wirkenden Druck wirkt zusätzlich auf den Stellkolben 43 in jeder Stelldruckkammer 44, 45 die Kraft einer Zentrierfeder.

Die erste Stelldruckkammer 44 und die zweite Stelldruckkammer 45 sind mit jeweils einem Stelldruck beaufschlagbar, der über eine erste Stelldruckleitung 46 bzw. eine zweite Stelldruckleitung 47 zugeführt wird. Zum Einstellen des jeweiligen Stelldrucks in der ersten Stelldruckkammer 44 bzw. der zweiten Stelldruckkammer 45 sind die erste Stelldruckleitung 46 und die zweite Stelldruckleitung 47 über ein Stelldruckregelventil 48 entweder mit einer druckführenden Stelldruckversorgungsleitung 49 oder einer mit einem Tankvolumen 51 verbundenen Entspannungsleitung 50 verbunden.

In der in der Fig. 2 befindet sich das Stelldruckregelventil 48 in seiner Ruheposition. Das Stelldruckregelventil 48 ist als 4/3-Wegeventil ausgeführt und verbindet in der Ruheposition gedrosselt die erste Stelldruckleitung 46 und die zweite Stelldruckleitung 47 mit der Stelldruckversorgungsleitung 49 sowie der Entspannungsleitung 50. Durch die Kraft zweier weiterer Zentrierfedern wird das Stelldruckregelventil 48 in dieser Ruheposition gehalten, solange an den Elektromagneten 23 oder 24 kein durch das Steuergerät 15 erzeugtes Steuersignal anliegt. Die beiden Elektromagneten 23 bzw. 24 sind vorzugsweise als Proportionalmagneten ausgeführt.

Liegt an beispielsweise dem ersten Elektromagneten 23 ein Steuersignal an, so beaufschlagt er das Stelldruckregelventil 48 in der Fig. 2 nach rechts mit einer Stellkraft und betätigt damit das Stelldruckregelventil 48 in Richtung seiner ersten Endposition. In Richtung der ersten Endposition wird die erste Stelldruckleitung 46 zunehmend mit der Stelldruckversorgungsleitung 49 verbunden. Gleichzeitig wird in Richtung der ersten Endposition zunehmend die zweite Stelldruckleitung 47 mit der Entspannungsleitung 50 verbunden. In der ersten Endposition des Stelldruckregelventils 48 wird somit die erste Stelldruckkammer 44 aus der Stelldruckversorgungsleitung 49 über die erste Stelldruckleitung 46 gedrückt. Gleichzeitig wird der zweite Stelldruckraum 45 über die zweite Stelldruckleitung 47 und die Entspannungsleitung 50 in Richtung des Tankvolumens 51 entspannt. Auf Grund der unterschiedlichen in der ersten Stelldruckkammer 44 und der zweiten Stelldruckkammer 45 herrschenden Drücke wirkt auf den Stellkolben 43 eine axiale Kraft, die den Stellkolben 43 in der Fig. 2 nach rechts verschiebt. In der ersten Stelldruckleitung 46 und der zweiten Stelldruckleitung 47 ist vorzugsweise jeweils eine Drossel angeordnet.

Die so erzeugte Stellbewegung des Stellkolbens 43, die auf den Verstellmechanismus der Hydropumpe 4 übertragen wird, wird durch eine Kolbenstange 52 auf das Stelldruckregelventil 48 zurückgekoppelt. Die Rückkopplung wirkt der ursprünglichen Auslenkung des Stelldruckregelventils 48 durch den ersten Elektromagneten 23 entgegen und ermöglicht somit eine proportionale Verstellung des Stellkolbens 43 im Hinblick auf das an dem ersten Elektromagneten 23 anliegende Signal. In die entgegengesetzte Richtung kann die Hydropumpe 4 durch Beaufschlagen des zweiten Elektromagneten 24 mit einem entsprechenden Steuersignal verstellt werden.

Der maximal verfügbare Stelldruck in den Stelldruckkammern 44 bzw. 45 entspricht dem in der Stelldruckversorgungsleitung 49 herrschenden Druck. Die Stelldruckversorgungsleitung 49 ist daher an dem von dem Stelldruckregelventil 48 abgewandten Ende mit einer Speisedruckleitung 54 verbunden. In der Stelldruckversorgungsleitung 49 ist eine Drossel 53 angeordnet.

Die Speisedruckleitung 54 ist mit einem förderseitigen Anschluss einer Speisepumpe 55 verbunden. Die Speisepumpe 55 ist ebenfalls mit der Antriebswelle 3a verbunden, durch die auch die Hydropumpe 4 angetrieben wird. Die Speisepumpe 55 ist als Konstantpumpe ausgeführt und zur Förderung in lediglich einer Richtung vorgesehen. Die Speisepumpe 55 saugt über eine Saugleitung 66 und ein optionales Filter 67 Druckmittel aus dem Tankvolumen 51 an.

Die Speisepumpe 55 dient nicht nur zum Erzeugen des für die Verstellvorrichtung 12 benötigten maximalen Stelldrucks, sondern darüber hinaus auch zum Bedrücken des gesamten hydraulischen Kreises, der während der Inbetriebnahme zunächst drucklos ist. Der Speisedruck liegt in der Regel erheblich unter dem Betriebsdruck, der durch die Hydropumpe 4 erzeugt wird. Zur Absicherung des Speisesystems ist die Speisedruckleitung 54 mit einem Speisedruckbegrenzungsventil 56 verbunden. Durch das Speisedruckbegrenzungsventil 56 kann der Druck in der Speisedruckleitung 54 beispielsweise auf einen Wert von 25 bar begrenzt werden.

Das Speisedruckbegrenzungsventil 56 ist hierzu federbelastet, wobei entgegen der Kraft der Feder der in der Speisedruckleitung 54 herrschende Druck wirkt. Übersteigt der in der Speisedruckleitung 54 herrschende Druck einen durch die Feder vorgegebenen Wert, so öffnet das Speisedruckbegrenzungsventil 56 und entspannt die Speisedruckleitung 54 in das Tankvolumen 51. Das von der Speisepumpe 55 abgewandte Ende der Speisedruckleitung 54 mündet in eine Verbindungsleitung 57 aus. Die Verbindungsleitung 57 verbindet die erste Arbeitsleitung 5a mit der zweiten Arbeitsleitung 5b. Zwischen der Ausmündung der Speisedruckleitung 54 in die Verbindungsleitung 57 und der ersten Arbeitsleitung 5a ist eine erste Speiseventileinheit 58 angeordnet. Ebenso ist zwischen der Ausmündung der Speisedruckleitung 54 in die Verbindungsleitung 55 und der zweiten Arbeitsleitung 5b eine zweite Speiseventileinheit 59 ausgebildet. Die erste Speiseventileinheit 58 und die zweite Speiseventileinheit 59 entsprechen sich in ihrem Aufbau. Zur Vermeidung unnötiger Wiederholungen wird nachfolgend lediglich kurz auf den Aufbau der zweiten Speiseventileinheit 59 eingegangen.

Die zweite Speiseventileinheit 59 weist ein Rückschlagventil 60 und ein parallel dazu angeordnetes Druckbegrenzungsventil 61 auf. Das Rückschlagventil 60 ist so in der Verbindungsleitung 51 angeordnet, dass es in Richtung auf die zweite Arbeitsleitung 5b öffnet. Übersteigt der durch die Speisepumpe 55 in der Speisedruckleitung 54 erzeugte Druck den in der Arbeitsleitung 5b herrschende Druck, so öffnet das Rückschlagventil 60 und die zweite Arbeitsleitung 5b wird aus der Speisedruckleitung 54 bedrückt. Liegt dagegen der Druck in der zweiten Arbeitsleitung 5b höher als in dem Speisedrucksystem, so schließt das Rückschlagventil 60. Um ein kritisches Ansteigen des Drucks in der zweiten Arbeitsleitung 5b zu verhindern, ist parallel zu dem Rückschlagventil 60 ein Druckbegrenzungsventil 61 angeordnet.

Das Druckbegrenzungsventil 61 ist ebenfalls ein federbelastetes Druckbegrenzungsventil, bei dem entgegen der Kraft der Feder der Druck in der zweiten Arbeitsleitung 5b wirkt. Der Druck in der zweiten Arbeitsleitung 5b wirkt auf eine Messfläche des Druckbegrenzungsventils 61 und erzeugt dort eine hydraulische Kraft. Diese hydraulische Kraft wirkt entgegen der Druckfeder, so dass beim Übersteigen eines durch die Druckfeder vorgegebenen Grenzwerts das Druckbegrenzungsventil 61 öffnet und eine durchströmbare Verbindung aus der zweiten Arbeitsleitung 5b in Richtung der Speisedruckleitung 54 freigibt. Auf diese Weise wird das geschlossene Rückschlagventil 60 umgangen.

Entsprechend erfolgt über das Rückschlagventil der ersten Speiseventileinheit 58 eine Entspannung der zweiten Arbeitsleitung 5b in Richtung der ersten Arbeitsleitung 5a. Ist auch in der ersten Arbeitsleitung 5a bereits ein höherer Druck als der Speisedruck vorhanden, so wird das über das Druckventil 61 der zweiten Arbeitsleitung 5b entnommene Druckmittel über die Speisedruckleitung 54 sowie das Speisedruckbegrenzungsventil 56 in das Tankvolumen 51 entspannt.

Entsprechendes gilt für einen unzulässig hohen Druckanstieg in der ersten Arbeitsleitung 5a.

Zur weiteren Absicherung ist eine Druckabschneidungsventileinheit 62 vorgesehen. Mittels der Druckabschneidungsventileinheit 62 kann der in der Stelldruckversorgungsleitung 49 verfügbare maximale Stelldruck reduziert werden. Eine solche Reduzierung des maximal verfügbaren Stelldrucks erfolgt, indem die Stelldruckversorgungsleitung 49 stromabwärts der Stelldruckdrossel 53 in das Tankvolumen 51 entspannt wird. Die Druckabschneidungsventileinheit 62 weist hierzu ein Druckabschneidungsventil 65 auf. Das Druckabschneidungsventil 65 ist wiederum mit einer vorzugsweise einstellbaren Feder belastet und wird so in seiner geschlossenen Position gehalten. Entgegengesetzt der Kraft der Einstellfeder wirkt auf das Druckabschneidungsventil 65 ein dem Druckabschneidungsventil 65 an einer Messfläche zugeführter Vergleichsdruck. Der Vergleichsdruck wird über ein Wechselventil 63 zugeführt.

Das Wechselventil 63 ist in einer zweiten Verbindungsleitung 64 angeordnet, die sich von der ersten Arbeitsleitung 5a zu der zweiten Arbeitsleitung 5b erstreckt. Über das Wechselventil 63 wird der jeweils höhere der in den Arbeitsleitungen 5a, 5b herrschenden Drücke der Messfläche des Druckabschneidungsventils 65 zugeführt. Bei Ansteigen des höheren Druckwertes in den beiden Arbeitsleitungen 5a,b über einen Grenzwert wird durch das Druckabschneidungsventil 65 eine durchströmbare Verbindung freigegeben, so dass die Stelldruckversorgungsleitung 49 zunehmend mit dem Tankvolumen 51 verbunden wird. Dadurch sinkt in der Stelldruckversorgungsleitung 49 der Druck. Unabhängig von der Stellung des Stelldruckregelventils 48 werden somit beide Stelldruckkammern 44 und 45 zunehmend mit dem Tankvolumen verbunden. In den dann drucklosen Stelldruckkammern 44 und 45 wirkt auf den Stellkolben 43 lediglich die Kraft der beiden Zentrierfedern, die den Stellkolben 43 in eine mittlere Position bringen. In dieser mittleren Position ist die Hydropumpe 4 auf verschwindendes Fördervolumen eingestellt.

Die Hydropumpe 4 kann aus ihrer Nulllage heraus in zwei Richtungen ausgeschwenkt werden. Durch das Ausschwenken in zwei Richtungen kann die Hydropumpe 4 sowohl in die erste Arbeitsleitung 5a, als auch in die zweite Arbeitsleitung 5b fördern. Die Begrenzung des Fördervolumens der Hydropumpe 4 auf einen minimalen Wert kann deshalb nur über eine entsprechende Einstellung durch das Stelldruckregelventil 48 erfolgen.

In der Fig. 3 ist ein hydraulischer Schaltplan zu Beschaltung des verstellbaren Hydromotors 6 gezeigt.

Der Hydromotor 6 nimmt das von der Hydropumpe 4 in eine der Arbeitsleitungen 5a, 5b geförderte Druckmittel auf. Die zum Einstellen des Schluckvolumens des Hydromotors 6 dienende weitere Verstellvorrichtung 13 weist ein zweites Stelldruckregelventil 68 auf sowie einen zweiten Stellzylinder 69. In dem zweiten Stellzylinder 69 ist ein zweiter Stellkolben 70 angeordnet, der den zweiten Stellzylinder 69 in eine dritte Stelldruckkammer 71 und eine vierte Stelldruckkammer 72 teilt. Der zweite Stellkolben 70 ist mechanisch über eine Kolbenstange 73 mit dem Verstellmechanismus des Hydromotors 6 verbunden. Zudem wird über eine zweite Koppelstange 74 die jeweilige Position des Stellkolbens 70, die dem eingestellten Schwenkwinkel des Hydromotors 6 entspricht, auf das zweite Stelldruckregelventil 68 rückgekoppelt.

Abhängig von der Position des zweiten Stellkolbens 70 wird hierzu über eine Koppelfeder 75 eine Kraft in axialer Richtung auf das zweite Stelldruckregelventil 68 übertragen. Die Kraft der Koppelfeder 75 wirkt dabei entgegengesetzt zu der Kraft des dritten Elektromagneten 25, der in Abhängigkeit von einem von dem Steuergerät 15 generierten Signal eine Kraft auf das Stelldruckregelventil 68 ausübt.

Zum Erzeugen eines Stelldrucks in der dritten Stelldruckkammer 71 und einer daraus resultierenden hydraulischen Kraft auf den Stellkolben 70 ist eine Stelldruckverbindungsleitung 78 mit der dritten Stelldruckkammer 71 verbunden. Die Stelldruckverbindungsleitung 78 ist über ein erstes Rückschlagventil 76 mit der ersten Arbeitsleitung 5a verbunden. Über ein zweites Rückschlagventil 77 ist die Stelldruckverbindungsleitung 78 mit der zweiten Arbeitsleitung 5b verbunden. Die beiden Rückschlagventile 76 und 77 öffnen in Richtung der Stelldruckverbindungsleitung 78, so dass der dritten Stelldruckkammer 71 der jeweils höhere der beiden in den Arbeitsleitungen 5a, 5b herrschenden Drücke zugeführt wird.

Der in der vierten Stelldruckkammer 72 auf den zweiten Stellkolben 70 wirkende Druck wird über eine Regeldruckleitung 79 zugeführt. In Abhängigkeit von der jeweiligen Position des zweiten Stelldruckregelventils 78 wird die Regeldruckleitung 79 entweder mit der Stelldruckverbindungsleitung 78 oder mit einer Tankanschlussleitung 80 verbunden. Das zweite Stelldruckregelventil 68 kann zwischen seinen beiden Endpositionen jede beliebige Position einnehmen.

In der in der Fig. 3 dargestellten Position wird durch die Kraft einer Einstellfeder 81, die vorzugsweise einstellbar ausgeführt ist, das zweite Stelldruckregelventil 68 in seiner Ruheposition gehalten. In dieser Ruheposition ist die Regeldruckleitung 79 über die Tankanschlussleitung 80 mit dem Tankvolumen 51 verbunden. Die Kraft der Einstellfeder 81 wirkt gleichsinnig mit der Kraft der Koppelfeder 75 auf das zweite Stelldruckregelventil 68. In entgegengesetzter Richtung ist in Abhängigkeit von einem anliegenden Steuersignal des Steuergeräts 15 das zweite Stelldruckregelventil 68 durch die Kraft des dritten Elektromagneten 25 beaufschlagbar. Bei Wirken einer Kraft des dritten Elektromagneten 25 auf das zweite Stelldruckregelventil 68 wird das zweite Stelldruckregelventil 68 in Richtung seiner zweiten Endposition ausgelenkt. In diese Endposition ist die Stelldruckverbindungsleitung 78 mit der Regeldruckleitung 79 verbunden. Damit wirkt auch in der vierten Stelldruckkammer 72 der in der Stelldruckverbindungsleitung 78 herrschende Druck. Auf Grund der in der vierten Stelldruckkammer 72 größeren Kolbenfläche des zweiten Stellkolbens 70 wird daher der Stellkolben 70 in der Fig. 3 nach links verschoben. Diese Verschiebung erfolgt solange, bis auf Grund der durch die Koppelfeder 75 auf das zweite Stelldruckregelventil 68 übertragenen Kraft ein neues Gleichgewicht zwischen der durch den dritten Elektromagneten 25 und die Einstellfeder 81 sowie die Koppelfeder 75 erzeugten Kraft hergestellt ist.

In der Fig. 3 ist dargestellt, dass der Hydromotor 6 über eine Welle 9' direkt mit einem angetriebenen Rad 83 verbunden ist. Die Betriebsbremse ist lediglich als Ausschnitt 82 stark vereinfacht dargestellt. Wird - wie es bereits ausführlich unter Bezugnahme auf Fig. 1 geschildert wurde - bei Betätigung der Betriebsbremse ein Steuersignal erzeugt, so wird dieses Steuersignal durch das Steuergerät 15 verarbeitet und der Schwenkwinkel des Hydromotors 6 in Richtung kleinerwerdenden Schluckvolumens verstellt. Bei dem in der Fig. 3 dargestellten Ausführungsbeispiel wird durch eine niedrigere Kraft des dritten Elektromagneten 25 auf das zweite Stelldruckregelventil 68 eine Verstellung in Richtung kleineren Schluckvolumens erreicht. In diesem Fall wird durch die Kraft der Einstellfeder 81 sowie der Koppelfeder 75 die vierte Stelldruckkammer 72 zunehmend mit dem Tankvolumen 51 verbunden. Dadurch wird der Schwenkwinkel des Hydromotors 6 in Richtung kleinerwerdenden Schwenkwinkels verstellt, bis ein vorgegebener Wert für den minimalen Schwenkwinkel erreicht ist. Dieser minimale Schwenkwinkel kann beispielsweise durch einen mechanischen Anschlag 84 in dem Hydromotor 6 festgelegt sein. Der Hydromotor 6 wird dann solange in Richtung kleinerwerdenden Schluckvolumens verstellt, bis eine in dem Hydromotor 6 angeordnete Schrägscheibe an dem mechanischen Anschlag 84 anliegt.

Zum Einstellen eines minimalen Schwenkwinkels ist es jedoch nicht erforderlich, dass in dem Hydromotor 6 ein mechanischer Anschlag 84 vorhanden ist. Ebenso kann durch Vorgabe eines Signals einer bestimmten Größe durch das Steuergerät 15 der dritte Elektromagnet 25 der weiteren Stellvorrichtung 13 so beaufschlagt werden, dass der Hydromotor 6 auf einen dem minimalen Schluckvolumen entsprechenden minimalen Schwenkwinkel gestellt wird.

Eine solche Vorgehensweise hat den Vorteil, dass in anderen Betriebssituationen über den mechanischen Anschlag hinaus der Schwenkwinkel des Hydromotors 6 weiter in Richtung kleineren Schluckvolumens verstellt werden kann. So ist es insbesondere möglich, bei einem Schaltvorgang eines nachgeschalteten Schaltgetriebes den Hydromotor auf einen anderen, kleineren Schwenkwinkel zu stellen, so dass das Schleppmoment des Hydromotors ausgeglichen wird und die Abtriebswelle 7 drehmomentfrei ist. Ist dagegen ein Gang bei dem Schaltgetriebe eingelegt, so kann während eines Bremsvorgangs, bei dem ein Steuersignal durch die Betriebsbremse vorgegeben wird, der Hydromotor 6 auf einen davon unterschiedlichen minimalen Schwenkwinkel verstellt werden, bei dem das eingestellte minimale Schluckvolumen nicht nur das Schleppmoment des Hydromotors 6 sondern auch das zusätzliche Schleppmoment des Schaltgetriebes bzw. des Differentials 10 kompensiert.

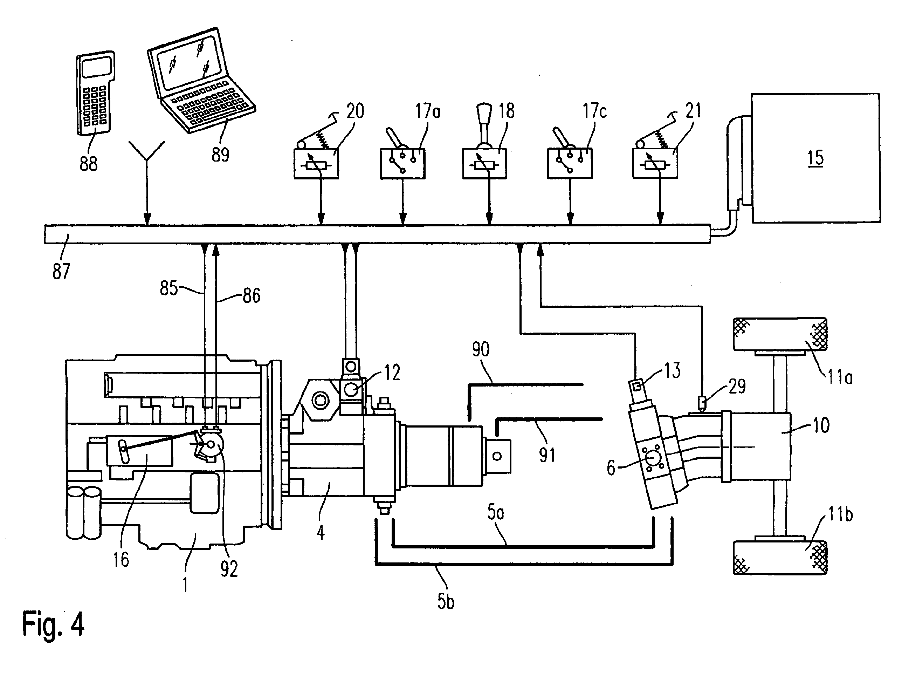

Die Fig. 4 zeigt noch einmal stark vereinfacht einen erfindungsgemäßen hydrostatischen Antrieb. In dem dort dargestellten Ausführungsbeispiel ist mit der Hydropumpe 4 lediglich ein Hydromotor 6 verbunden, der direkt mit dem Differential 10 beispielsweise der Hinterachse eines Fahrzeugs verbunden ist. Die Kommunikation der einzelnen Bedienelemente bzw. das Ausgeben der Signale des Steuergeräts 15 erfolgt über eine Schnittstelle 87, die beispielsweise eine RS 232-Schnittstelle sein kann. In der Fig. ist es zusätzlich dargestellt, die Einspritzpumpe 16 des Antriebsmotors 1 über einen Schrittmotor 92 zu regeln. Der Schrittmotor 92 ist hierzu über die RS 232-Schnittstelle 87 über eine Signalleitung 85 sowie eine weitere Signalleitung 86 mit dem Steuergerät 15 verbunden. Weiterhin ist es in der Fig. 4 dargestellt, dass neben der ersten Arbeitsleitung 5a und der zweiten Arbeitsleitung 5b Druckmittel von der Hydropumpe 4 auch in einen weiteren Kreislauf mit Arbeitsleitungen 90 und 91 befördert wird. So kann z.B. über die weiteren Arbeitsleitungen 90 und 91 ein weiteres Aggregat betrieben werden. Zum Beispiel ist es möglich, eine hydraulische Servolenkung durch die Hydropumpe 4 mit Druckmittel zu beaufschlagen.

Die Wartung des dargestellten hydraulischen Systems erfolgt über Serviceeinrichtungen 88, 89, die ebenfalls über die RS 232-Schnittstelle auf das Steuergerät 15 zugreifen können. Mit Hilfe der Serviceeinrichtungen 88, 89 ist es z.B. möglich, den Fehlerspeicher des Systems auszulesen oder Parametersätze zu überarbeiten. Insbesondere können damit veränderte Rampen zum Einstellen des minimalen Schwenkwinkels des Hydromotors 6 bzw. der Hydropumpe 4 abgespeichert werden. Ebenso ist es möglich, z.B. bei der Verwendung eines Drucksignals in der zweiten Bremsleitung 34, geänderte Grenzwerte zum Ansprechen der Verstellung in Richtung minimalen Schluckvolumens einzustellen.

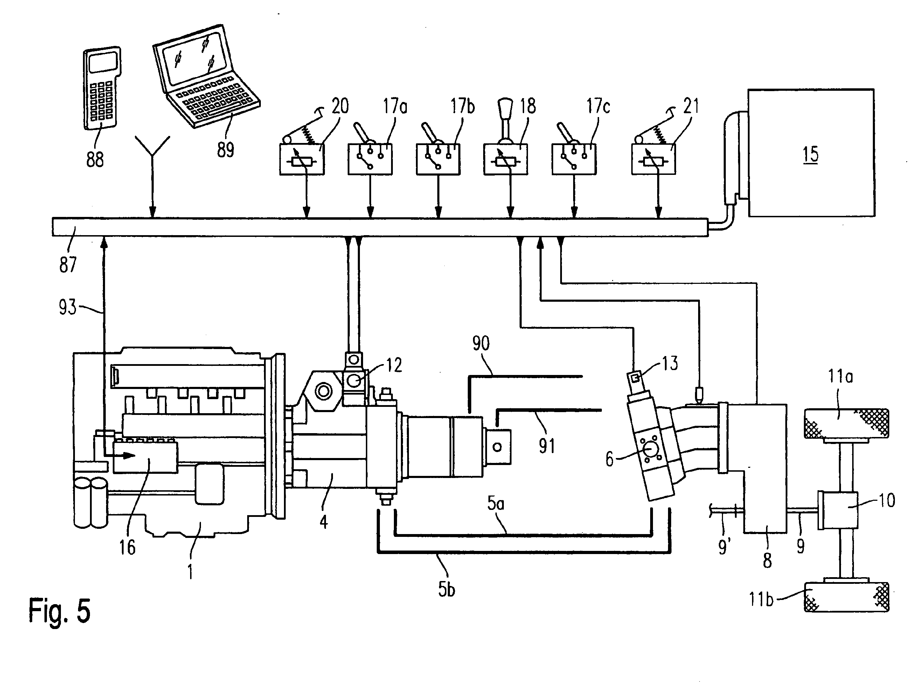

Eine gegenüber dem dargestellten Beispiel der Fig. 4 erweiterten Funktionalität zeigt das in Fig. 5 dargestellte Antriebssystem. Der Hydromotor 4 ist hier nicht mehr direkt mit dem Differential 10 einer angetriebenen Achse verbunden, sondern mit dem Schaltgetriebe 8. In der dargestellten Ausführungsform des Schaltgetriebes 8 ist zusätzlich zu der Getriebeausgangswelle 9 eine weitere Abtriebswelle 9' vorgesehen. Diese kann beispielsweise über eine Kardanwelle mit einer zweiten angetriebenen Achse verbunden werden. Damit wird ein einfaches Allradsystem betrieben, bei dem der Antrieb über lediglich einen Hydromotor 6 erfolgt.

Weiterhin sind keine einzelnen Signalleitungen zur Ansteuerung der Einspritzpumpe 16 des Antriebsmotors 1 vorgesehen. Vielmehr wird eine Verbindung zwischen der Einspritzpumpe 16 über einen sog. CAN-Bus durchgeführt. Der Einsatz eines solchen CAN-Busses hat den Vorteil, dass weitere, ebenfalls mit dem CAN-Bus eines Fahrzeugs verbundene Aggregate über dasselbe Bussystem angesprochen bzw. gewartet werden können.

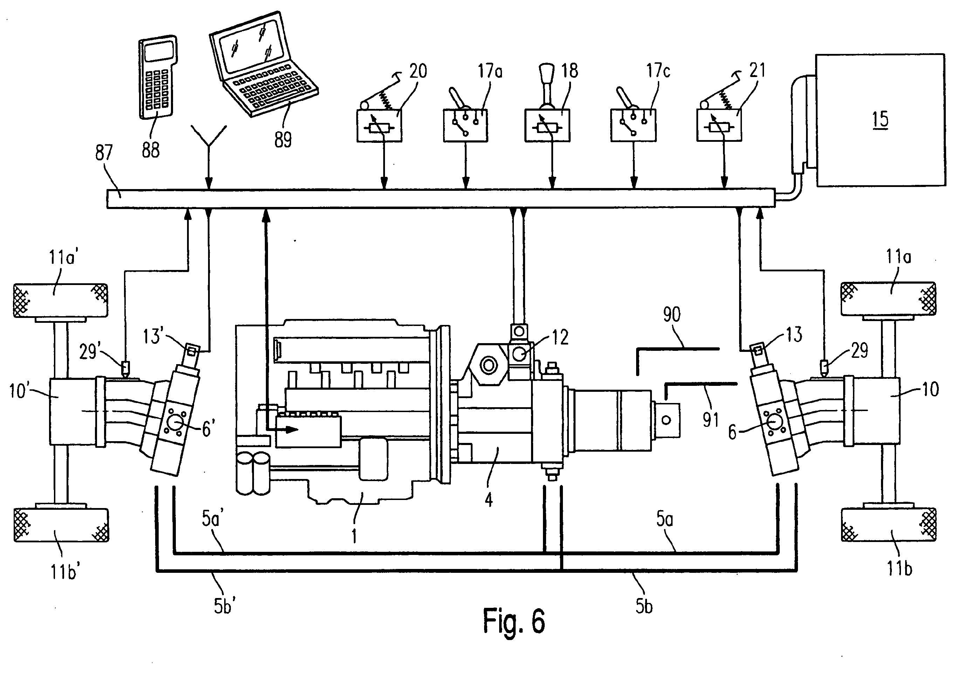

In der Fig. 6 ist ein drittes Ausführungsbeispiel für einen erfindungsgemäßen Fahrzeugantrieb dargestellt. Ebenso wie in den Ausführungsbeispielen der Fig. 4 und 5 sind bereits beschriebene Elemente mit identischen Bezugszeichen versehen. Um unnötige Wiederholungen zu vermeiden, wird diesbezüglich auf die vorstehenden Ausführungen verwiesen.

Bei dem in der Fig. 6 dargestellten Fahrzeugantrieb sind sowohl an beispielsweise einer Hinterachse wie einer Vorderachse eines Fahrzeugs jeweils ein Hydromotor 6, 6' angeordnet. Im Unterschied zu dem bereits beschriebenen einfachen Allradsystem ist hier an jeder Fahrzeugachse ein separater Hydromotor 6 bzw. 6' vorgesehen. Die Hydromotoren 6, 6' sind jeweils unmittelbar an ein Differential 10, 10' angeflanscht. Um die Drehmomentfreiheit der jeweiligen Abtriebswelle 7, bzw. 7' der Hydromotoren 6, 6' detektieren zu können, ist jeweils ein separater Drehmomentsensor 29 bzw. 29' vorgesehen. Die Drehmomentsensoren 29, 29' übermitteln ihre Signale ebenfalls über eine RS 232-Schnittstelle 87 an das Steuergerät 15.

Um die beiden Hydromotoren 6, 6' über die Hydropumpe 4 mit Druckmittel versorgen zu können, ist neben der ersten Arbeitsleitung 5a sowie der zweiten Arbeitsleitung 5b jeweils eine weitere erste Arbeitsleitung 5a' bzw. eine weitere zweite Arbeitsleitung 5b' vorgesehen. Auf diese Weise sind der Hydromotor 6 sowie der weitere Hydromotor 6' parallel in einem geschlossenen Kreislauf mit der antreibenden Hydropumpe 4 verbunden.

## Patentansprüche

1. Verfahren zum Abbremsen eines mittels eines hydrostatischen Getriebes (28) mit zumindest einem verstellbaren Hydromotor (6, 6') angetriebenen und durch eine Betriebsbremse verzögerbaren Fahrzeugs,
**gekennzeichnet durch** folgende Verfahrensschritte:
- Erkennen eines bestimmten Bremsvorgangs der Betriebsbremse,
- Verstellen des Hydromotors (6, 6') auf einen minimalen Schwenkwinkeln,
- Erkennen der Beendigung des bestimmten Bremsvorgangs und
- Verstellen des Hydromotors (6, 6') auf einen einer **durch** den Bremsvorgang erreichten Fahrgeschwindigkeit angepassten Schwenkwinkel, wobei
**durch** den auf den minimalen Schwenkwinkel eingestellten Hydromotor (6, 6') das Schleppmoment des Hydromotors (6, 6') ausgeglichen wird, oder alternativ **durch** den auf den minimalen Schwenkwinkel eingestellten Hydromotor (6, 6') mit den angetriebenen Rädern (11a, 11b, 11a', 11b', 83) verbundene Achswellen (40a, 40b) drehmomentfrei gehalten werden.

2. Verfahren nach Anspruch 1,
**dadurch gekennzeichnet**
**dass** zusätzlich zur Verstellung des Schwenkwinkels des Hydromotors (6, 6') ein Fördervolumen einer Hydropumpe (4) des hydrostatischen Getriebes (28) auf einen minimalen Wert verstellt wird.

3. Verfahren nach Anspruch 1,
**dadurch gekennzeichnet**
**dass** zumindest an einer Achswelle (40a, 40b) das dort wirkende Drehmoment gemessen wird und die Einstellung des minimalen Schwenkwinkels abhängig von dem an der Achswelle (40a, 40b) gemessenen Drehmoment erfolgt.

4. Verfahren nach einem der Ansprüche 1 bis 3,
**dadurch gekennzeichnet,**
**dass** zum Erkennen des bestimmten Bremsvorgangs ein von einem Steuergerät (32) der Betriebsbremse ausgegebenes Steuersignal verwendet wird.

5. Verfahren nach einem der Ansprüche 1 bis 4,
**dadurch gekennzeichnet**
**dass** zum Erkennen des bestimmten Bremsvorgangs bei einer hydraulischen Betriebsbremse ein bei Überschreiten eines Bremsdrucks erzeugtes Steuersignal verwendet wird.

6. Hydrostatischer Antrieb mit einer Hydropumpe (4) und zumindest einem damit durch eine erste und eine zweite Arbeitsleitung (5a, 5b) verbundenen verstellbaren Hydromotor (6, 6'), der mit einem Fahrzeugantrieb verbunden ist, auf den zum Abbremsen eine Betriebsbremse wirkt,
**dadurch gekennzeichnet,**
**dass** zur Verzögerung des Fahrzeugs der Schwenkwinkel des Hydromotors (6, 6') abhängig von einem Steuersignal der Betriebsbremse auf einen minimalen einstellbar ist, wobei durch den auf den minimalen Schwenkwinkel eingestellten Hydromotor (6, 6') das Schleppmoment des Hydromotors (6, 6') ausgeglichen ist, oder alternativ durch den auf den minimalen Schwenkwinkel eingestellten Hydromotor (6, 6') mit den angetriebenen Rädern (11a, 11b, 11a', 11b' 83) verbundene Achswellen (40a, 40b) drehmomentfrei gehalten sind.

7. Hydrostatischer Antrieb nach Anspruch 6,
**dadurch gekennzeichnet**
**dass** das Steuersignal durch ein ABS-Steuergerät (32) erzeugbar ist.

8. Hydrostatischer Antrieb nach Anspruch 6,
**dadurch gekennzeichnet**
**dass** die Betriebsbremse einen hydraulischen Kreis umfasst und das Steuersignal durch einen Drucksensor erzeugbar ist.

## Claims

1. Method for braking a vehicle, which is driven by means of a hydrostatic transmission (28) with at least one adjustable hydro-motor (6, 6') and capable of being decelerated by a service brake,
**characterised by the following procedural stages:**
- recognition of a given braking action of the service brake,
- adjustment of the hydro-motor (6, 6') to a minimum pivot angle,
- recognition of the termination of the given braking action and
- adjustment of the hydro-motor (6, 6') to a pivot angle adapted to a travel speed reached through the braking action, wherein
the drag torque of the hydro-motor (6, 6') is balanced by the hydro-motor (6, 6') adjusted to the minimum pivot angle, or alternatively, axle shafts (40a, 40b) connected to the driven wheels (11a, 11b, 11a', 11b', 83) are held torque-free by the hydro-motor (6, 6') adjusted to the minimum angle of rotation.

2. Method according to claim 1,
**characterised in that**,
in addition to the adjustment of the pivot angle of rotation of the hydro-motor (6, 6'), a delivery volume of a hydro-pump (4) of the hydrostatic transmission (28) is adjusted to a minimum value.

3. Method according to claim 1,
**characterised in that**
at least the torque acting on one axle shaft (40a, 40b) is measured, and the adjustment of the minimum pivot angle is implemented dependent upon the torque measured on the axle shaft (40a, 40b).

4. Method according to any one of claims 1 to 3,
**characterised in that**
a control signal output by a control device (32) of the service brake is used for the recognition of the given braking action.

5. Method according to any one of claims 1 to 4,
**characterised in that**,
in the case of a hydraulic service brake, a control signal generated, when a braking pressure is exceeded, is used for the recognition of the given braking action.

6. Hydrostatic drive with a hydro-pump (4) and at least one adjustable hydro-motor (6, 6'), which is connected to the latter via a first and a second service line (5a, 5b), and is connected to a vehicle drive, on which a service brake acts in order to achieve a braking,
**characterised in that**
the deceleration of the vehicle and dependent upon a control signal of the service brake, the pivot angle of the hydro-motor (6, 6') is adjustable to a minimum, wherein the drag torque of the hydro-motor (6, 6') is balanced by the hydro-motor (6, 6') adjusted to the minimum pivot angle, or alternatively, axle shafts (40a, 40b) connected to the driven wheels (11a, 11b, 11a', 11b', 83) are held torque-free by the hydro-motor (6, 6') adjusted to the minimum angle of rotation.

7. Hydrostatic drive according to claim 6,
**characterised in that**
the control signal can be generated by an ABS control device (32).

8. Hydrostatic drive according to claim 6,
**characterised in that**
the service brake comprises a hydraulic circuit, and the control signal can be generated by a pressure sensor.

## Revendications

1. Procédé pour freiner un véhicule entraîné au moyen d'une transmission hydrostatique (28) avec au moins un moteur hydraulique réglable (6, 6') et pouvant être ralenti par un frein de service,
**caractérisé par** les étapes suivantes et :
- reconnaître une opération de freinage définie du frein de service,
- régler le moteur hydraulique (6, 6') sur un angle de pivotement minimal,
- reconnaître la fin de l'opération de freinage définie, et
- régler le moteur hydraulique (6, 6') sur un angle de pivotement adapté à une vitesse de conduite atteinte par l'opération de freinage, dans lequel,
le couple de traînée du moteur hydraulique (6, 6') est compensé par le moteur hydraulique (6, 6') réglé sur l'angle de pivotement minimal, ou bien en variante, le moteur hydraulique (6, 6') réglé sur l'angle de pivotement minimal maintient sans couple de rotation des arbres primaires (40a, 40b) reliés aux roues actionées (11a, 11b, 11a', 11b', 83).

2. Procédé selon la revendication 1, **caractérisé en ce qu'**en plus du réglage de l'angle de pivotement du moteur hydraulique (6, 6'), un volume d'alimentation d'une pompe hydraulique (4) de la transmission hydrostatique (28) est réglé sur une valeur minimale.

3. Procédé selon la revendication 1, **caractérisé en ce qu'**au moins au niveau d'un arbre primaire (40a, 40b), le couple de rotation qui y agit est mesuré et le réglage de l'angle de pivotement minimal s'effectue en fonction du couple de rotation mesuré au niveau de l'arbre primaire (40a, 40b).

4. Procédé selon l'une quelconque des revendications 1 à 3, **caractérisé en ce que** pour reconnaître ladite opération de freinage définie, un signal de commande délivré par un élément de commande (32) du frein de service est utilisé.

5. Procédé selon l'une quelconque des revendications 1 à 4, **caractérisé en ce que** pour reconnaître ladite opération de freinage définie sur un frein de service hydraulique, un signal de commande généré lors d'un dépassement d'une pression de freinage est utilisé

6. Entraînement hydrostatique comprenant une pompe hydraulique (4) et au moins un moteur hydraulique (6, 6') réglable relié à celle-ci par une première et une deuxième conduite de service (5a, 5b), le moteur étant relié à un entraînement de véhicule sur laquelle agit un frein de service pour un freinage,
**caractérisé en ce que**
pour le ralentissement du véhicule l'angle de pivotement du moteur hydraulique (6, 6') est réglable sur un angle de pivotement minimal en fonction d'un signal de commande du frein de service, dans lequel le couple de traînée du moteur hydraulique (6, 6') est compensé par le moteur hydraulique (6, 6') réglé sur l'angle de pivotement minimal, ou bien en variante, le moteur hydraulique (6, 6') réglé sur l'angle de pivotement minimal maintient sans couple de rotation des arbres primaires (40a, 40b) reliés aux roues actionées (11a, 11b, 11a', 11b', 83).

7. Entraînement hydrostatique selon la revendication 6, **caractérisé en ce que** le signal de commande peut être généré par un élément de commande ABS (32).

8. Entraînement hydrostatique selon la revendication 6, **caractérisé en ce que** le frein de service comprend un circuit hydraulique et que le signal de commande peut être généré par un capteur de pression.
